# EUROPÄISCHE PATENTSCHRIFT

(11) **EP 0 731 230 B1**
(45) Veröffentlichungstag und Bekanntmachung des Hinweises auf die Patenterteilung: **07.11.2001**
(21) Anmeldenummer: 96103168.9
(22) Anmeldetag: 01.03.1996
(51) Int. Cl.: E03D 1/32, E03D 9/14, F16K 31/34, F16K 47/12

(54) **WC-Spülkasten-Füllventil**
Toilet cistern filling valve
Soupape de remplissage pour réservoir de chasse d'eau

(30) Priorität: 08.03.1995 DE 19508258
(43) Veröffentlichungstag der Anmeldung: 11.09.1996
(73) Patentinhaber: DAL GmbH & Co.KG, 32457 Porta Westfalica (DE)
(72) Erfinder: Blanke, Willfried, 32427 Minden (DE); Fuchs, Norbert, 32425 Minden (DE); Pieper, Gerhard, 32457 Porta Westfalica (DE)
(74) Vertreter: Grünecker, Kinkeldey, Stockmair & Schwanhäusser Anwaltssozietät

(56) Entgegenhaltungen:
- EP-A- 0 084 082
- EP-A- 0 470 642
- FR-A- 2 492 868
- GB-A- 1 011 141
- US-A- 3 605 816

## Beschreibung

Die Erfindung bezieht sich auf ein WC-Spülkasten-Füllventil gemäß dem Oberbegriff von Anspruch 1.

Derartige Füllventile zur Widerauffüllung eines WC-Spülkastens nach dessen Entleerung finden weit verbreitet Anwendung und haben sich was die Funktion des Auffüllens angeht bestens bewährt. Jedoch sind insbesondere im häuslichen Bereich die durch die mit der Auffüllung des WC-Spülkastens verursachten Geräusche oftmals sehr störend. Toilettenräume werden in aller Regel in direkter Nachbarschaft der Schlafräume in den Wohnungen angeordnet, weshalb es, insbesondere bei nächtlicher Benutzung der Toilettenanlage, zur Störung der Mitbewohner durch Geräuschbelästigung kommen kann. Aus diesem Grunde gibt es in letzter Zeit sehr starke Betrebungen WC-Spülkasten-Füllventile bereitzustellen, die ein Wiederauffüllen des Spülkastens relativ geräuscharm vornehmen.

Aus der FR-A-24 92 868 ist ein WC-Spülkasten-Einlaufventil bekannt, das zur Geräuschminderung einen am oberen Ende des Füllrohrs angeordneten Schraubengang aufweist.

Es ist daher die Aufgabe der vorliegenden Erfindung ein WC-Spülkasten-Füllventil der eingangs genannten Art bereitzustellen, das eine kompakte Ausführung aufweist.

Diese Aufgabe wird erfindungsgemäß durch die Merkmale des Anspruchs 1 gelöst.

Ein Teil der Strömungsenergie wird zum definierten Erzeugen eines Dralls und somit einer Fliehkraftkomponenten verwendet, so dass eine solche in den Spülkasten eingefüllte Strömung möglichst wenig Fließgeräusche verursacht.

Dem Flüssigkeitsablauf angrenzend dem Schraubengang ist ein Füllrohr zugeordnet, dessen unteres Ende zumindest beim unteren Füllstandniveau im Spülkasten im wesentlichen in die Flüssigkeit eingetaucht ist. Der in Drall versetzte Flüssigkeitsstrom kann hervorragend an der Innenwandung des Füllrohres hinunterlaufen, wobei er durch seine Fliehkraftkomponente sehr gut an der Innenwandung anhaftet. Dadurch, daß das untere Ende des Füllrohres immer in Flüssigkeit getaucht ist entstehen auch keine zusätzlichen Geräusche durch Aufschlagen von freifallendem Wasser auf eine Wasseroberfläche. Der Schwimmer ist im Füllrohr angeordnet und eine Steuerstange ist im wesentlichen koaxial durch das Füllrohr, das Einschraubteil und das in das obere Ende des Füllrohrs eingesetzte Gehäuseteil nach oben durch eine entsprechende Öffnung im Gehäuseteil geführt, wobei die Öffnung zusätzlich zur Be- und Entlüftung des Füllrohrs dient. Dies gewährt eine sehr kompakte Ausführung des gesamten, geräuscharmen Füllventils, wodurch eine raumsparende Anordnung ohne weiteres möglich ist.

Insbesondere kann der Schraubengang im wesentlichen in die Innenwandung des Füllrohrs übergehen, wodurch beim Austreten des Flüssigkeitsstroms aus dem Schraubengang in das Füllrohr im wesentlichen keine Turbulenzen, die zu Geräuschen führen könnten, entstehen.

Von besonderem Vorteil ist bei einer weiteren Ausführungsform, wenn in den Flüssigkeitsablauf in Strömungsrichtung nachfolgend dem Verschlußelement eine Drosseleinrichtung angeordnet ist. Die Drosseleinrichtung sorgt dafür, daß in den ihr nachfolgenden Querschnitten eine im wesentlichen vollständige Füllung zumindest im Schraubengang mit möglichst wenigen Lufteinschlüssen gegeben ist, so daß daraus resultierende Turbulenzen unterdrückt sind. Die Drossel sorgt ferner dafür, daß in jedem Betriebszustand eine ausreichende Flüssigkeitsmenge durch die Ventildurchtrittsöffnung in den Schraubengang zum vollständigen Füllen desselben nachfließen kann. Ebenfalls ist durch die Drossel eine weitere Geräuschreduktion gegeben.

Eine besonders einfache Variante besteht in diesem Zusammenhang darin, daß der Strömungsquerschnitt in einem Bereich, bevorzugt im mittleren Bereich, des Schraubengangs reduziert ist. Der Vorteil besteht darin, daß der Schraubengang und Drossel durch ein und dasselbe Bauteil erzeugt werden, wodurch sich eine kostengünstigere Ausgestaltung, sowie ein einfacher Aufbau ergeben.

Um den Drall des Flüssigkeitsstroms allmählich zu vergrößern kann zumindest der Außendurchmesser des Schraubengangs sich in Strömungsrichtung zumindest bereichsweise vergrößern. Die allmähliche Erhöhung der Fliehkraftkomponete trägt weiterhin zur Reduktion der Geräuschentwicklung bei.

Günstigerweise kann der Schraubengang zwischen einem konischen Einschraubteil und einem entsprechend mit einem konischen Innengewinde versehenen Gehäuseteil gebildet sein. Durch einfaches Ineinanderschrauben der beiden Teile ergibt sich sowohl deren genaue Anordnung als auch die definierte Lage des Schraubengangs zwangsläufig. Darüber hinaus lassen sich zwei ineinander verschraubte Teile sehr gut gegeneinander abdichten, so daß keine Leckströmung bzw. Kurzschlußströmung am Schraubengan entsteht.

Insbesondere kann eine zuverlässige Füllfunktion des Füllventils dadurch erreicht werden, daß das Verschlußelement von einer Membran gebildet ist, der eine über einen Ventilstößel, der mit der Steuerstange des Schwimmers wirkungsverbunden ist, zu öffnende oder schließende Entlastungskammer zugeordnet ist, wobei die Entlastungskammer mit dem Flüssigkeitszulauf über einen kleinen, engen Ringspalt an der Membran in Verbindung steht, und durch die Entlastungskammer einen Flüssigkeitsdruck über eine größere Fläche auf die Membran aufbringbar ist als durch den Flüssigkeitszulauf. Die Entlastungskammer sorgt in bekannter Weise entsprechend der Stellung des Schwimmers und der damit zugehörigen offenen oder geschlossenen Position des Ventilstößels für eine zuverlässige Selbsthaltung der Membran im geöffneten oder geschlossenen Zustand.

Dabei hat sich insbesondere bei einer Ausführungsform bewährt, wenn die Ventildurchgangsöffnung durch einen gleichzeitig von der Membran verschließbaren Rohrabschnitt als Teil des Flüssigkeitszulaufs und einen den Rohrabschnitt umgebenen Ringkanal als Teil des Flüssigkeitsablaufs gebildet ist, wobei der Ringkanal mit dem Schraubengang verbunden ist.

Im folgenden wird ein Ausführungsbeispiel der Erfindung anhand einer Zeichnung näher erläutert. Es zeigt:
- Fig. 1: ein WC-Spülkasten-Füllventil gemäß der vorliegenden Erfindung und
- Fig. 2: den oberen Bereich des Füllventils aus Fig. 1 in einer vergrößerten Darstellung.

Das in den Figuren dargestellte WC-Spülkasten-Füllventil wird zum entsprechenden Zuführen von Wasser in den Spülkasten, nachdem dieser im wesentlichen entleert wurde, eingesetzt. Das Füllventil weist einen Flüssigkeitszulauf 1, einen Flüssigkeitsablauf 2 und eine diese beiden trennende Membran 3 als Verschlußelement auf.

Der Flüssigkeitszulauf 1 setzt sich zusammen aus einem Anschlußstück 4 zum Anschließen an eine nicht dargestellte Versorgungsleitung, das mittels einer Überwurfmutter 5 an dem eigentlichen Ventilgehäuse 6 angeschraubt ist. Das Anschlußstück 4 und das Ventilgehäuse 6 sind durch einen Dichtungsring 7 gegeneinander abgedichtet. Zwischen der Bohrung 8 des Anschlußstückes 4 und der Strömungsöffnung 9 des Ventilgehäuses 6 ist ein Düsenstück 10 eingesetzt, das dafür sorgt, daß möglichst wenig Änderung im Strömungsquerschnitt vom Übergang des Anschlußstückes 4 auf das Ventilgehäuse 6 vorhanden ist.

Die Strömungsöffnung 9 im Ventilgehäuse 6 weist eine 90°-Krümmung auf und endet in einem Rohrstück 11, auf dessen Stirnfläche die Membran 3 im geschlossenen Zustand des Füllventils aufsitzt. Das Rohrstück 11 wird von einem in das Gehäuse eingesetzten Einsatzteil 12 umgeben, so daß um das Rohrstück 11 ein Ringkanal 13 mit einer trichterförmigen Einlaßöffnung 14 als Bestandteil der Ventildurchtrittsöffnung gebildet ist.

Die Membran 3 wird zwischen dem Einsatzteil 12 und einer Lochblende 15 am Ventilgehäuse 6 festgehalten. An der Lochblende 15 ist ein Führungsdorn 16, der im Bereich der Ventildurchtrittsöffnung am Ende des Rohrstücks 11 in ein in der Membran 3 angeordnetes Führungsstück 17 mit Spiel zur Bildung eines engen Ringspaltes eingreift. Der Ringspalt verbindet den Flüssigkeitszulauf 1 mit einer zumindest zwischen der Membran 3 und der Lochblende 15 gebildeten Entlastungskammer 18. Dieser untere Teil der Entlastungskammer 18 steht über die Bohrungen in der Lochblende 15 mit dem oberen Teil der Entlastungskammer 18 in Verbindung. Der obere Teil der Entlastungskammer 18 wird von einem auf das Ventilgehäuse 6 aufgeschraubten Verschlußdeckel 19 und der Lochblende 15 umgrenzt. Der Verschlußdeckel 19 weist eine Ventilöffnung 20 auf, in der sich ein Ventilstößel 21 mit einer Dichtung 22 befindet, durch den die Ventilöffnung 20 geöffnet oder geschlossen werden kann. An dem Ventilstößel 21 ist ein Betätigungshebel 23 angebracht, der bevorzugt am Ventilgehäuse 6 oder dem Verschlußdeckel 19 angebracht ist und durch dessen Schwenkbewegung der Ventilstößel 21 entsprechend die Ventilöffnung 20 öffnet oder schließt.

Das Ventilgehäuse 6 weist im Bereich des Flüssigkeitsablaufs 2 eine kegelstumpfförmige Gehäuseerweiterung 24 auf, die mit ihrem unteren Endbereich 25 fest in das obere Ende 26 eines Füllrohres 27 eingesetzt ist, dessen unteres Ende 28 bevorzugt immer in das Wasser im Spülkasten eintaucht. Die Gehäuseerweiterung weist ein konisches Innengewinde 29 auf, in das ein konisches Einschraubteil 30 mit entsprechendem konischen Außengewinde 31 im wesentlichen paßgenau eingeschraubt ist. Das konische Innengewinde 29 und das Außengewinde 31 sind so aufeinander abgestimmt, daß zwar eine ausreichende Führung und Befestigung des Einschraubteils 30 in der Gehäuseerweiterung 24 erfolgt, jedoch zwischen diesen beiden Teilen ein Strömungskanal in Form eines Schraubengangs 32 geformt ist, dessen oberes Ende mit dem Ringkanal 13 strömungsverbunden ist. Der Schraubengang 32 ist so ausgeformt, daß dessen Strömungsquerschnitt im Eintrittsbereich 33 und im Austrittsbereich 34 größer ist als im mittleren Bereich 35. Somit wird durch den Schraubengang 32 gleichzeitig eine Drossel bereitgestellt.

Die Gehäuseerweiterung 24 ist an ihrem oberen Ende mit einer Öffnung 36 versehen, die von einem Bund 37 umgrenzt wird.

Dieser Bund 37 und die angrenzende innere Stirnfläche der Gehäuseerweiterung 24 liegen im wesentlichen paßgenau mit entsprechend ausgeformten Abschnitten des Einschraubteils 30 dichtend zusammen, damit keine Leckströmung am Schraubengang 32 vorbei direkt ins Füllrohr 27 einströmt.

Im Inneren des Füllrohrs 27 befindet sich ein Schwimmer 38, der an einer Steuerstange 39 verstellbar angebracht ist. Die Steuerstange 39 erstreckt sich durch das Füllrohr 27, das Einschraubteil 30 und die Öffnung 36 nach oben und ist mit dem Betätigungshebel 23 an ihrem oberen Ende verbunden. Zur Einstellung der verschiedenen Positionen des Schwimmers 38 bezüglich der Steuerstange 39 weist die Steuerstange 39 ein Außengewinde 40 auf, in das entsprechende Gewindegänge 41 des Schwimmers eingreifen. Das obere Ende der Steuerstange 39 weist zwei Anschlagflächen 42 und 43 auf, die ein Betätigen des Betätigungshebels 23 mit einem vorbestimmten Spiel ermöglichen.

Im folgenden wird die Wirkungs- und Funktionsweise der oben beschriebenen Ausführungsform näher erläutert.

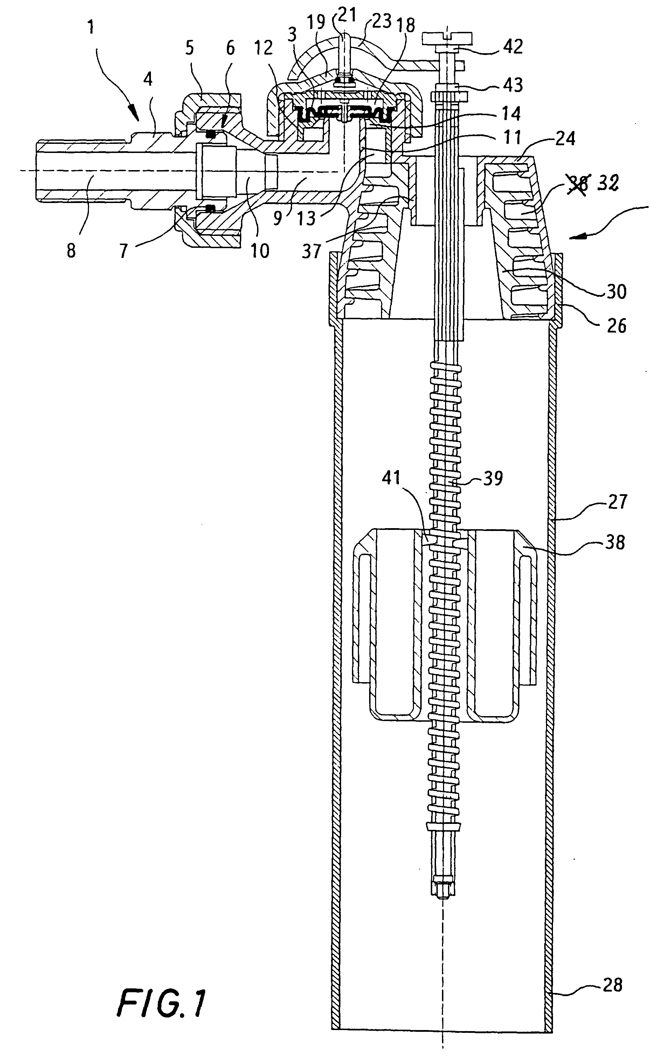

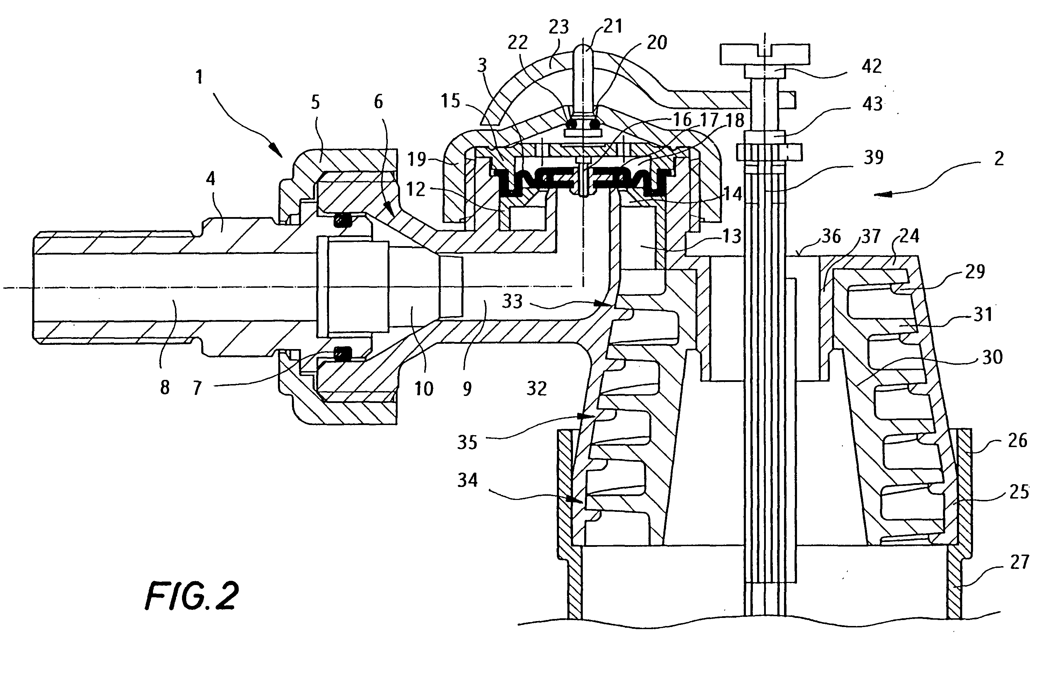

Das in den Fig. 1 und 2 dargestellte Füllventil befindet sich in seiner geschlossenen Stellung. Die Position des Schwimmers 38 definiert den Füllstand im Spülkasten, bei dem die untere Anschlagfläche 43 gegen den Betätigungshebel 23 drückt und den Ventilstößel 21 zum Schließen der Ventilöffnung 20 nach oben bewegt. In dieser Stellung kann nunmehr Wasser vom Flüssigkeitszulauf 1 durch den Ringspalt zwischen dem Führungsdorn 16 und dem Führungsstück 17 in die Entlastungskammer 18 fließen und gleichzeitig auf den Ventilstößel 21 eine Kraft ausüben, so daß dieser in seine geschlossene Position gedrückt wird. Da im Flüssigkeitszulauf 1 und in der Entlastungskammer 18 die gleichen Drücke vorherrschen und die Flüssigkeit in der Entlastungskammer 18 mit einer viel größeren Fläche auf die Membran 3 drücken kann, als die Flüssigkeit vom Flüssigkeitszulauf 1, wird die Membran 3 in geschlossener Stellung gehalten. Man spricht in diesem Zusammenhang auch von hydraulischer Selbsthaltung.

Wird nunmehr der Spülkasten durch einen Spülvorgang geleert sinkt der Schwimmer 38 im Füllrohr ebenfalls ab, da sich das Füllrohr 27 durch die Öffnung 36 mit Luft füllen kann. Wenn die obere Anschlagfläche 42 gegen den Betätigungshebel 23 stößt, wird der Ventilstößel 21 gegen den Flüssigkeitsdruck in der Entlastungskammer 18 nach unten bewegt, und die Flüssigkeit in der Entlastungskammer 18 kann durch die Ventilöffnung 20 entweichen. Da sich nunmehr in der Entlastungskammer 18 kein oder nur noch ein geringer Druck aufbauen kann, kann die Flüssigkeit im Flüssigkeitszulauf 1 nunmehr die Membran 3 hochdrücken und somit die Ventildurchgangsöffnung freigeben. Das Wasser strömt aus dem Rohrstück 11 heraus und seitlich über die Einlaßöffnung 14 in den Ringkanal 13 hinein. Aus dem Ringkanal wird das Wasser in den Schraubengang 32 eingeleitet. Dem Wasser wird somit ein Drall verliehen, der sich zudem noch durch die konusmäßige Ausgestaltung in Strömungsrichtung gesehen vergrößert. Zusätzlich bewirkt die Drosselstelle im Schraubengang 32 im mittleren Bereich 35, daß immer ausreichend Wasser nachfließen kann um den Schraubengang 32 vollständig zu füllen. Das aus dem Schraubengang 32 mit Drall austretende Wasser gleitet weiterhin mit Drall an der Innenfläche des Füllrohrs 27 am Schwimmer vorbei nach unten, wo es geräuscharm in das sich im Spülkasten befindliche Wasser eingefüllt wird. Dadurch, daß dem Wasserfluß ein entsprechender Drall verliehen wird, lassen sich die Füllgeräusche eines solchen Ventils erheblich reduzieren. Der Schwimmer 38 schwimmt selbstverständlich bei diesem Vorgang entsprechend dem Füllstandsniveau im Spülkasten wieder nach oben, bis die untere Anschlagfläche 43 den Betätigungshebel 23 wieder nach oben bewegt und somit die Ventilöffnung 20 schließt. Sofort ist das Füllventil wieder geschlossen.

## Patentansprüche

1. WC-Spülkasten-Füllventil mit einem einer Versorgungsleitung zugeordneten Flüssigkeitszulauf (1), einem dem Spülkasten zugeordneten Flüssigkeitsablauf (2) und einem einer zwischen Flüssigkeitszulauf (1) und -ablauf (2) angeordneten Ventildurchgangsöffnung zugeordneten Verschlußelement (3), das durch einen Schwimmer (38) entsprechend dem Füllstandniveau im Spülkasten zum Öffnen und Schließen der Ventildurchgangsöffnung schaltbar ist, wobei in Strömungsrichtung nachfolgend dem Verschlußelement (3) zumindest ein Bereich des Flüssigkeitsablaufs (2) als Schraubengang (32) derart ausgeformt ist, daß die Flüssigkeit bei geöffnetem Verschlußelement (3) mit einem Drall von dem Flüssigkeitsablauf (2) an den Spülkasten abgegeben wird, und wobei dem Flüssigkeitsablauf (2) angrenzend dem Schraubengang (32) ein Füllrohr (27) zugeordnet ist, dessen unteres Ende (28) beim unteren Füllstandsniveau im Spülkasten im wesentlichen in die Flüssigkeit eingetaucht ist, **dadurch gekennzeichnet, daß** der Schwimmer (38) im Füllrohr (27) angeordnet ist und eine Steuerstange (39) im wesentlichen koaxial durch das Füllrohr (27), das Einschraubteil (30) und das in das obere Ende (26) des Füllrohrs (27) eingesetzte Gehäuseteil (24) nach oben durch eine entsprechende Öffnung (36) im Gehäuseteil (24) geführt ist, wobei die Öffnung (36) zusätzlich zur Be- und Entlüftung des Füllrohrs (27) dient.

2. Füllventil nach Anspruch 1, **dadurch gekennzeichnet, daß** der Schraubengang (32) im wesentlichen in die Innenwandung des Füllrohrs (27) übergeht.

3. Füllventil nach Anspruch 1 oder 2, **dadurch gekennzeichnet, daß** in dem Flüssigkeitsablauf (2) in Strömungssrichtung nachfolgend dem Verschlußelement (3) eine Drosseleinrichtung angeordnet ist.

4. Füllventil nach Anspruch 3, **dadurch gekennzeichnet, daß** die Drosseleinrichtung dadurch gebildet ist, daß der Strömungsquerschnitt in einem Bereich, bevorzugt dem mittleren Bereich (35), des Schraubengangs (32) reduziert ist.

5. Füllventil nach einem der Ansprüche 1 bis 4, **dadurch gekennzeichnet, daß** zumindest der Außendurchmesser des Schraubengangs (32) sich in Strömungsrichtung zumindest bereichsweise vergrößert.

6. Füllventil nach Anspruch 5, **dadurch gekennzeichnet, daß** der Schraubengang (32) zwischen einem konischen Einschraubteil (30) und einem entsprechend mit einem konischen Innengewinde (29) versehenen Gehäuseteil (24) gebildet ist.

7. Füllventil nach einem der Ansprüche 1 bis 6, **dadurch gekennzeichnet, daß** das Verschlußelement (3) von einer Membran gebildet ist, der eine über einen Ventilstößel (21), der mit der Steuerstange (39) des Schwimmers (38) wirkungsverbunden ist, zu öffnende oder schließende Entlastungskammer (18) zugeordnet ist, wobei die Entlastungskammer (18) mit dem Flüssigkeitszulauf (1) über einen kleinen, engen Ringspalt an der Membran (3) in Verbindung steht und durch die Entlastungskammer (18) ein Flüssigkeitsdruck über eine größere Fläche auf die Membran (3) aufbringbar ist als durch den Flüssigkeitszulauf (1).

8. Füllventil nach Anspruch 7, **dadurch gekennzeichnet, daß** die Ventildurchgangsöffnung durch einen gleichzeitig von der Membran (3) verschließbaren Rohrabschnitt (11) als Teil des Flüssigkeitszulaufs (1) und einen den Rohrabschnitt (11) umgebenden Ringkanal (13) als Teil des Flüssigkeitsablaufs (2) gebildet ist, wobei der Ringkanal (13) mit dem Schraubengang (32) verbunden ist.

## Claims

1. A WC-cistern filling valve comprising a liquid inlet (1) assigned to a supply line, a liquid outlet (2) assigned to said cistern, and a closing element (3) which is assigned to a valve passage opening arranged between liquid inlet (1) and outlet (2) and is switchable by a float (38) in accordance with the filling level in said cistern for opening and closing said valve passage opening, at least a portion of said liquid outlet (2) being shaped as a thread (32) in the flow direction downstream of said closing element (3) in such a manner that liquid is discharged with a swirl from said liquid outlet (2) to said cistern in the opened state of said closing element (3), and a filling tube (27) whose lower end (28) is substantially immersed into the liquid at the lower filling level in said cistern being assigned to said liquid outlet (2) next to said thread (32), **characterized in that** said float (38) is arranged in said filling tube (27) and a control rod (39) is guided substantially coaxially through said filling tube (27), said screw member (30) and said housing member (24) inserted into the upper end (26) of said filling tube (27), namely upwards through a corresponding opening (36) in said housing member (24), said opening (36) additionally serving to air and vent said filling tube (27).

2. The filling valve according to claim 1, **characterized in that** said thread (32) substantially passes into the inner wall of said filling tube (27).

3. The filling valve according to claim 1 or 2, **characterized in that** a throttling means is arranged in said liquid outlet (2) in the flow direction downstream of said closing element (3).

4. The filling valve according to claim 3, **characterized in that** said throttling means is formed **in that** the flow cross-section is reduced in a portion, preferably the center portion (35), of said thread (32).

5. The filling valve according to any one of claims 1 to 4, **characterized in that** at least the outer diameter of said thread (32) is increased in the direction of flow at least in portions.

6. The filling valve according to claim 5, **characterized in that** said thread (32) is formed between a conical screw member (30) and a housing member (24) provided with a correspondingly conical internal thread (29).

7. The filling valve according to any one of claims 1 to 6, **characterized in that** said closing element (3) is formed by a diaphragm which has assigned thereto a relief chamber (18) to be opened or closed via a valve tappet (21) which is in operative communication with said control rod (39) of said float (38), said relief chamber (18) being in communication with said liquid inlet (1) via a small narrow angular gap on said diaphragm (3), and a liquid pressure being exertable by said relief chamber (18) over a larger surface on said diaphragm (3) than through said liquid inlet (1).

8. The filling valve according to claim 7, **characterized in that** said valve passage opening is formed by a tubular section (11) being simultaneously closable by said diaphragm (3) as part of said liquid inlet (1) and by an annular channel (13) surrounding said tubular section (11) as part of said liquid outlet (2), said annular channel (13) being connected to said thread (32).

## Revendications

1. Soupape de remplissage pour réservoir de chasse d'eau dotée d'une arrivée de liquide (1) associée à une tuyauterie d'alimentation, d'une sortie de liquide (2) associée au réservoir de chasse et d'un élément de fermeture (3) associé à un orifice de boisseau disposé entre l'arrivée de liquide (1) et la sortie de liquide (2), lequel élément peut être commandé par un flotteur (38) en fonction du niveau d'eau dans le réservoir de chasse afin d'ouvrir et de fermer l'orifice du boisseau, moyennant quoi, en aval de l'élément de fermeture (3) par référence au sens d'écoulement, au moins une zone de la sortie de liquide (2) sous forme de pas de vis (32) est formée de telle manière que le liquide soit amené de la sortie de liquide (2) vers le réservoir sous forme de tourbillon, lorsque l'élément de fermeture (3) est ouvert, et moyennant quoi un tuyau de remplissage (27) est associé à la sortie de liquide (2) adjacente au pas de vis (32), dont l'extrémité inférieure (28) est immergée pour l'essentiel dans le liquide en présence d'un bas niveau de remplissage du réservoir, **caractérisée en ce que** le flotteur (38) est positionné dans le tuyau de remplissage (27) et une bielle de commande (39) passe sensiblement dans le sens coaxial à travers le tuyau de remplissage (27), la partie filetée (30) et la partie de logement (24) placée dans l'extrémité supérieure (26) du tuyau de remplissage (27) est amenée vers le haut, en passant par une ouverture correspondante (36) réalisée dans la partie de logement (24), moyennant quoi l'ouverture (36) sert en outre à la ventilation et à la purge de l'air du tuyau de remplissage (27).

2. Soupape de remplissage selon la revendication 1, **caractérisée en ce que** le pas de vis (32) se prolonge sensiblement dans la paroi intérieure du tuyau de remplissage (27).

3. Soupape de remplissage selon la revendication 1 ou 2, **caractérisée en ce qu'**un dispositif d'étranglement est disposé dans la sortie de liquide (2) en aval de l'élément de fermeture (3) par référence au sens d'écoulement.

4. Soupape de remplissage selon la revendication 3, **caractérisée en ce que** le dispositif d'étranglement est conçu de telle manière que la section d'écoulement soit réduite à une zone, de préférence médiane (35), du pas de vis (32).

5. Soupape de remplissage selon l'une quelconque des revendications 1 à 4, **caractérisée en ce qu'**au moins le diamètre extérieur du pas de vis (32) s'élargit au moins par endroit dans le sens d'écoulement.

6. Soupape de remplissage selon la revendication 5, **caractérisée en ce que** le pas de vis (32) est formé entre une partie filetée conique (30) et une partie de logement (24) munie d'un taraudage conique correspondant (29).

7. Soupape de remplissage selon l'une quelconque des revendications 1 à 6, **caractérisée en ce que** l'élément de fermeture (3) est formé d'une membrane, à laquelle est associée une chambre de purge qui s'ouvre et se ferme par l'intermédiaire d'un bouton-poussoir (21) qui agit conjointement avec la bielle de commande (39) du flotteur (38), moyennant quoi la chambre de purge (18) est en liaison avec l'arrivée de liquide (1) au moyen d'une fente annulaire, petite et étroite, dans la membrane (3) et la membrane (3) reçoit une pression hydrostatique par la chambre de purge (18) sur une surface plus grande que par l'arrivée de liquide (1).

8. Soupape de remplissage selon la revendication 7, **caractérisée en ce que** l'orifice du boisseau est formé par une section de tuyau (11), pouvant être simultanément fermée par la membrane (3) et formant partie de l'arrivée de liquide (1), et par un canal circulaire (13) entourant la section de tuyau (11) et formant une partie de la sortie de liquide (2), le canal circulaire (13) étant relié au pas de vis (32).
